# EUROPÄISCHE PATENTSCHRIFT

(11) **EP 1 232 682 B1**
(45) Veröffentlichungstag und Bekanntmachung des Hinweises auf die Patenterteilung: **15.06.2005**
(21) Anmeldenummer: 02002831.2
(22) Anmeldetag: 08.02.2002
(51) Int. Cl.: A01D 41/127

(54) **Mähdrescher mit von der Erntegutbergungsvorrichtung abhängiger Antriebsleistung**
Combine with header dependent power drive
Moissonneuse-batteuse avec puissance motrice dépendante du tablier de coupe

(30) Priorität: 14.02.2001 US 783655
(43) Veröffentlichungstag der Anmeldung: 21.08.2002
(73) Patentinhaber: DEERE & COMPANY, Moline, Illinois 61265-8098 (US)
(72) Erfinder: Ehrecke, Kevin Laverne, Davenport, IA 52804 (US)
(74) Vertreter: Holst, Sönke, Dr.

(56) Entgegenhaltungen:
- EP-A- 0 914 764
- US-A- 4 967 544
- US-A- 5 878 557

## Beschreibung

Die Erfindung betrifft einen Mähdrescher mit einer am Mähdrescher anbringbaren Erntegutbergungsvorrichtung, einem Verbrennungsmotor zum Antrieb des Mähdreschers sowie einer elektronischen Motorsteuerung, die mit dem Verbrennungsmotor verbunden ist und die maximale Leistung des Verbrennungsmotors steuert, wobei in einem Speicher der elektronischen Motorsteuerung eine erste Leistungskurve und eine zweite Leistungskurve abgespeichert sind.

Mähdrescher sind große landwirtschaftliche Maschinen, die verwendet werden, um landwirtschaftliches Gut zu Ernten, Dreschen, Trennen und zu Reinigen. Motoren mit innerer Verbrennung werden zum Antrieb des Mähdreschers benutzt. Mähdrescher sind mit einem Korntank ausgestattet, um sauberes Korn zeitweilig zu speichern, bevor es durch einen Entladeschneckenförderer auf einen Anhänger oder Lastwagen abgeladen wird. Diese Maschinen sind in der Regel selbstfahrend und können mit zusätzlichen Gutbearbeitungseinrichtungen wie Strohhäckslern und Spreuverteilern ausgestattet sein. Der Wunsch des Landwirts nach gesteigerter Produktivität der Maschine verlangt nach höherer Motorleistung, von der ein hoher Anteil für den Vortrieb des Mähdreschers und zum Antrieb der Erntegutbergungsvorrichtung benötigt wird.

Typische Erntegutbergungsvorrichtungen für Mähdrescher sind Maispflücker zur Ernte von Mais und Getreideschneidwerke zum Ernten anderer Körner. Bei einem Maispflücker wird der größte Teil des Guts, das nicht Korn ist, auf dem Feld zurückgelassen. Bei einem Maispflücker wird der Maiskolben vom Maisstängel getrennt und zum Dreschen, Trennen und Reinigen in den Mähdrescher gefördert und der Maisstängel wird auf dem Feld zurückgelassen. Bei einem Getreideschneidwerk wird der Pflanzenstängel mit, dem Korn abgetrennt. Die ' ,vom Getreideschneidwerk geernteten, mit dem Korn verbundenen Teile des Guts, die nicht Korn sind, (d. h. das Stroh) müssen vom Korn getrennt werden. Somit sind die Leistungsanforderungen des Mähdreschers beim Ernten mit einem Getreideschneidwerk höher als beim Ernten mit einem Maispflücker.

Die US 5 878 557 A offenbart einen Mähdrescher, der durch einen Verbrennungsmotor angetrieben wird, der eine elektronische Motorsteuerung aufweist, wobei die Ausgangsleistung des Motors als Reaktion auf Leistungsanforderungen an dem Mähdrescher vermindert wird.

Das der Erfindung zugrunde liegende Problem wird darin gesehen, die Ausgangsleistung des Motors des Mähdreschers an die von der Erntegutbergungsvorrichtung vorgegebenen Anforderungen anzupassen.

Dieses Problem wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Der erfindungsgemäße Mähdrescher ist mit einem Verbrennungsmotor mit innerer Verbrennung ausgestattet, um die verschiedenen Einrichtungen des Mähdreschers anzutreiben. Eine elektronische Motorsteuerung wird verwendet, den Betrieb des Verbrennungsmotors zu überwachen und zu steuern. In der elektronischen Steuerung (oder einem mit ihr verbundenen Speicher) sind wenigstens zwei Leistungskurven zur Steuerung des Verbrennungsmotors abgespeichert. Die Leistungskurven enthalten eine Information über die Leistung des Motors in Abhängigkeit von einem beliebigen Parameter, beispielsweise der Motordrehzahl, den jeweils angetriebenen Einrichtungen des Mähdreschers oder der Temperatur. Sie können beispielsweise in Form einer Tabelle, Liste oder einer mathematischen Funktion abgespeichert sein. Es wird vorgeschlagen, dass ein Detektor für die Erntegutbergungsvorrichtung der Steuerung ein Signal zuführt, das eine Information über die Art der Erntegutbergungsvorrichtung enthält. Abhängig von der Art der Erntegutbergungsvorrichtung wird von der Motorsteuerung eine der Leistungskurven ausgewählt.

Auf diese Weise wird der Verbrennungsmotor entsprechend der Art der Erntegutbergungsvorrichtung gesteuert, so dass die Ausgangsleistung des Motors an die von der Erntegutbergungsvorrichtung vorgegebenen Anforderungen anpassbar ist.

Bei den möglichen Arten der Erntegutbergungsvorrichtung wird vorzugsweise zwischen Schneidwerken für Getreide und Maispflückern unterschieden. Wenn am Mähdrescher ein Maispflücker angebracht ist, führt der Detektor der Motorsteuerung ein Erntegutbergungsvorrichtungssignal zu, das darauf hinweist, dass ein Maispflücker angebracht ist. Die Motorsteuerung regelt den Motor herunter und steuert den Motor entsprechend der zweiten Leistungskurve. Wenn andererseits ein Schneidwerk für Getreide am Mähdrescher angebracht ist, steuert die Motorsteuerung den Motor entsprechend der ersten Leistungskurve, die höhere Leistungswerte beinhaltet.

Die erste bzw. zweite Leistungskurve können jeweils eine Familie von unterschiedlichen Leistungskurven enthalten. Die jeweils zur Steuerung des Motors verwendete Leistungskurve wird anhand eines weiteren Betriebsparameters des Mähdreschers aus der jeweiligen Familie ausgewählt.

Der Detektor für die Erntegutbergungsvorrichtung ist in einer einfachen Ausführungsform ein Schalter, der manuell von einem Bediener betätigt wird. Denkbar ist aber auch eine selbsttätige Erfassung der Art der Erntegutbergungsvorrichtung. Der beispielsweise als am Schrägförderer angebrachter Schalter, der mit der Erntegutbergungsvorrichtung zusammenwirkt, ausgeführte Detektor sendet in dieser Ausführungsform selbsttätig ein Erntegutbergungsvorrichtungssignal an die Motorsteuerung, sobald eine Erntegutbergungsvorrichtung an den Mähdrescher angekoppelt wird.

In den Zeichnungen ist ein nachfolgend näher beschriebenes Ausführungsbeispiel der Erfindung dargestellt. Es zeigt:
- Fig. 1: eine halbschematische Seitenansicht eines Mähdreschers,
- Fig. 2: ein Schema, das den Betrieb des Mähdreschers verdeutlicht.

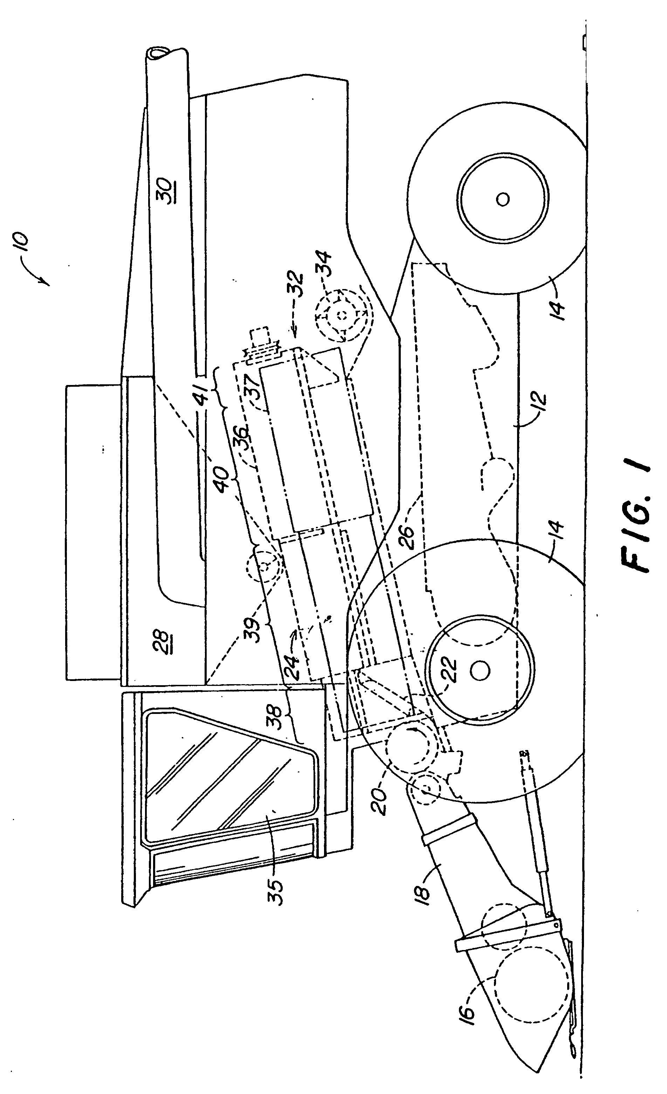

Figur 1 zeigt einen landwirtschaftlichen Mähdrescher 10 mit einer tragenden Struktur 12, die mit im Eingriff mit dem Erdboden stehenden Rädern 14 versehen ist. Obwohl der Mähdrescher 10 mit Rädern dargestellt ist, könnte er auch mit zwei oder vier Gleisketten versehen sein. Am Schrägförderer 18 ist eine Erntegutbergungsvorrichtung abnehmbar angebracht. Als Erntegutbergungsvorrichtung kommen eine Vielzahl von Ausführungsformen in Frage, einschließlich eines Schneidwerks für Getreide, eines Maispflückers, eines reihenabhängigen Erntevorsatzes oder einer Pick-Up. In Figur 1 wird eine Erntegutbergungsvorrichtung in Form des dargestellten Schneidwerks 16 verwendet, um Erntegut zu ernten und es dem Schrägförderer 18 zuzuführen. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse des Mähdreschers 10 angeordnet sein. Obwohl die vorliegende Erfindung anhand einer Gutbearbeitungseinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

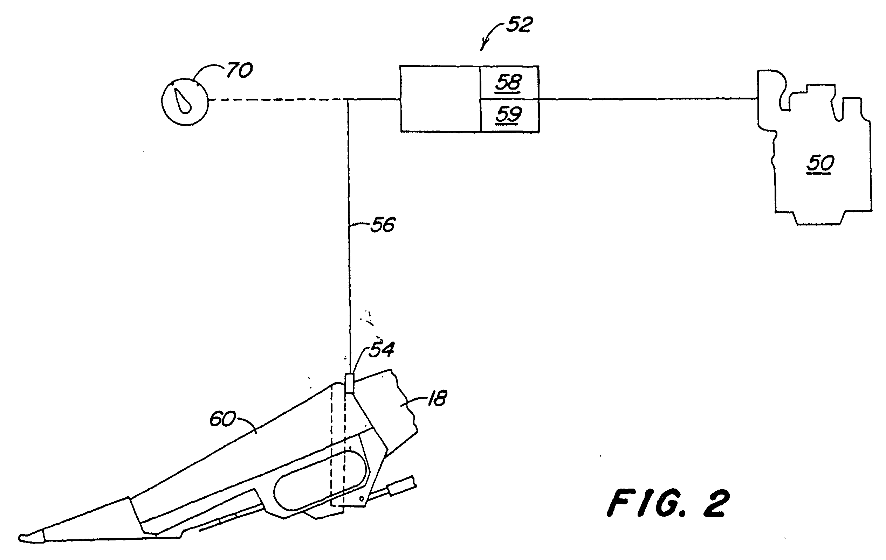

Wie oben diskutiert, werden die verschiedenen Gutbearbeitungselemente durch einen Verbrennungsmotor 50 mit innerer Verbrennung angetrieben, sh. Figur 2. Dieser Verbrennungsmotor 50 ist elektronisch mit einer elektronischen Motorsteuerung 52 verbunden. Die elektronische Motorsteuerung 52 steht wiederum über eine Leitung 56 mit einem Detektor 54 für die Erntegutbergungsvorrichtung in Kommunikationsverbindung. Die Erntegutbergungsvorrichtung in Figur 2 ist ein Maispflücker 60, der am Schrägförderer 18 befestigt ist. Der Detektor 54 stellt der Motorsteuerung 52 ein Maispflückersignal bereit, da ein Maispflücker 60 am Schrägförderer 18 angebracht ist. Für die in Figur 1 dargestellte Erntegutbergungsvorrichtung stellt der Detektor 54 der Motorsteuerung 52 ein Schneidwerkssignal bereit, da ein Schneidwerk 16 am Schrägförderer 18 befestig ist. Die elektronische Motorsteuerung 52 speichert in einem Speicher wenigstens zwei Leistungskurven ab. Die erste Leistungskurve 58 hat eine höhere Leistungsabgabe als die zweite Leistungskurve 59. Als Reaktion auf diese Erntegutbergungsvorrichtungssignale (Maispflückersignal oder Schneidwerkssignal) steuert die Motorsteuerung 52 den Verbrennungsmotor 50 entweder entsprechend der ersten Leistungskurve 58 oder der zweiten Leistungskurve 59. Wenn das Erntegutbergungsvorrichtungssignal ein Schneidwerkssignal ist, betreibt die Motorsteuerung 52 den Verbrennungsmotor 50 entsprechend der ersten Leistungskurve 58 mit höherer kW-Zahl. Wenn das Erntegutbergungsvorrichtungssignal ein Maispflückersignal ist, betreibt die elektronische Motorsteuerung 52 den Verbrennungsmotor 50 entsprechend der zweiten Leistungskurve 59.

Für den Detektor 54 für die Erntegutbergungsvorrichtung kommen verschiedene Ausführungsformen in Frage. Er kann ein einfacher Schalter 70 mit zwei Positionen sein, der in der Bedienerkabine 35 angebracht ist und vom Bediener betätigt wird. Er kann ein am Schrägförderer 18 befestigter Schalter sein, wie in Figur 2 ,dargestellt, der aktiviert wird, , wenn eine der beiden Erntegutbergungsvorrichtungen am Schrägförderer 18 befestigt wird. Außerdem kann die Detektion durch die elektronische Verbindung zwischen der Erntegutbergungsvorrichtung und dem Mähdrescher 10 erfolgen. Im Konkreten haben moderne Mähdrescher ein elektronisches Überwachungssystem. Diese Überwachungssysteme verwenden ein Signalübertragungsverfahren auf einem CAN-Bus, das dazu verwendet werden kann, die elektronische Motorsteuerung 52 über die Erntegutbergungsvorrichtung zu informieren.

Die erste Leistungskurve 58 und die zweite Leistungskurve 59 können jeweils eine Familie von Leistungskurven umfassen. Andere Überwaschungssysteme des Mähdreschers 10 können vorgeben, welche der Leistungskurven der jeweils ausgewählten Familie bei einer speziellen Anwendung oder Konfiguration benutzt werden. Beim Betrieb eines Schneidwerks für Getreide kann beispielsweise ein Feuchtigkeitssensor verwendet werden, den Feuchtigkeitsgehalt des geernteten Guts zu überwachen. Das Feuchtigkeitssignal des Feuchtigkeitssensors kann eine spezielle Leistungskurve aus der den Schneidwerken für Getreide zugeordneten Familie von Leistungskurven vorgeben. Umgekehrt kann auch die Art der Erntegutbergungsvorrichtung verwendet werden, um eine spezifische Leistungskurve aus einer Familie von Leistungskurven auszuwählen. Diese Familien können beliebigen anderen Parametern zugeordnet sein und entsprechend ausgewählt werden.

## Patentansprüche

1. Mähdrescher (10), mit einer am Mähdrescher (10) anbringbaren Erntegutbergungsvorrichtung, einem Verbrennungsmotor (50) zum Antrieb des Mähdreschers (10) sowie einer elektronischen Motorsteuerung (52), die mit dem Verbrennungsmotor (50) verbunden ist und die maximale Leistung des Verbrennungsmotors (50) steuert, wobei in einem Speicher der elektronischen Motorsteuerung (52) eine erste Leistungskurve (58) und eine zweite Leistungskurve (59) abgespeichert sind, **dadurch gekennzeichnet, dass** ein Detektor (54) für die Erntegutbergungsvorrichtung vorhanden ist, der ein von der Art der Erntegutbergungsvorrichtung abhängiges Erntegutbergungsvorrichtungssignal bereitstellt und dass die elektronische Motorsteuerung (52) abhängig vom Erntegutbergungsvorrichtungssignal den Verbrennungsmotor (50) entweder entsprechend der ersten Leistungskurve (58) oder der zweiten Leistungskurve (59) steuert.

2. Mähdrescher (10) nach Anspruch 1, **dadurch gekennzeichnet, dass** die Motorsteuerung (52) den Verbrennungsmotor (50) entsprechend der ersten Leistungskurve (58) steuert, wenn ein Schneidwerk (16) für Getreide .am Mähdrescher (10) angebracht ist und der Detektor (54) der Motorsteuerung (52) ein Schneidwerkssignal zuführt.

3. Mähdrescher (10) nach Anspruch 1 oder 2, **dadurch gekennzeichnet, dass** die Motorsteuerung (52) den Verbrennungsmotor (50) entsprechend der zweiten Leistungskurve (59) steuert, wenn ein Maispflücker (80) am Mähdrescher (10) angebracht ist und der Detektor (54) der Motorsteuerung (52) ein Maispflückersignal zuführt.

4. Mähdrescher (10) nach einem der Ansprüche 1 bis 3, **dadurch gekennzeichnet, dass** die erste Leistungskurve (58) einer höheren Ausgangsleistung entspricht als die zweite Leistungskurve (59).

5. Mähdrescher (10) nach einem der vorhergehenden Ansprüche, **dadurch gekennzeichnet, dass** die erste Leistungskurve (58) und/oder die zweite Leistungskurve (59) eine Familie von Leistungskurven umfassen.

6. Mähdrescher nach Anspruch 5, **dadurch gekennzeichnet, dass** eine Leistungskurve aus der Familie der Leistungskurven anhand eines weiteren Betriebsparameters ausgewählt wird.

7. Mähdrescher (10) nach einem der vorhergehenden Ansprüche, **dadurch gekennzeichnet, dass** der Detektor (54) für die Erntegutbergungsvorrichtung das jeweilige Erntegutbergungsvorrichtungssignal der elektronischen Motorsteuerung (52) als Reaktion darauf zuführt, dass eine entsprechende Erntegutbergungsvorrichtung am Mähdrescher (10) angebracht wird.

8. Mähdrescher (10) nach einem der Ansprüche 1 bis 6, **dadurch gekennzeichnet, dass** der Detektor (54) für die Erntegutbergungsvorrichtung von einem Bediener manuell betätigt wird.

9. Verfahren zur Steuerung eines Verbrennungsmotors (50) eines landwirtschaftlichen Mähdreschers (10), der mit einer elektronischen Motorsteuerung (52) zum Steuern des Verbrennungsmotors (50) ausgestattet ist, mit folgenden Schritten:
Abspeichern einer ersten Leistungskurve (58) in der elektronischen Motorsteuerung (52),
Abspeichern einer zweiten Leistungskurve (59) in der elektronischen Motorsteuerung (52),
**dadurch gekennzeichnet, dass** der elektronischen Motorsteuerung (52) von einem Detektor (54) ein von der Art einer Erntegutbergungsvorrichtung abhängiges Erntegutbergungsvorrichtungssignal zugeführt wird und dass der Verbrennungsmotor (50) abhängig vom Erntegutbergungsvorrichtungssignal entsprechend der ersten oder der zweiten Leistungskurve gesteuert wird.

10. Verfahren nach Anspruch 9, **dadurch gekennzeichnet, dass** der Detektor (54) die Art der Erntegutbergungsvorrichtung selbsttätig erfasst.

## Claims

1. A combine harvester (10) with a crop gathering device which can be fitted on the combine harvester (10), an internal combustion engine (50) for driving the combine harvester (10) and an electronic engine controller (52) which is connected to the internal combustion engine (50) and controls the maximum power of the internal combustion engine (50), wherein first and second power curves (58 and 59) are stored in a memory of the electronic engine controller (52), **characterized in that** a detector (54) for the crop gathering device is provided and supplies a crop gathering device signal dependent on the nature of the crop gathering device, and **in that** the electronic engine controller (52) controls the internal combustion engine (50) in accordance with either the first power curve (58) or the second power curve (59) in dependence on the crop gathering device signal.

2. A combine harvester (10) according to claim 1, **characterized in that** the engine controller (52) controls the internal combustion engine (50) in accordance with the first power curve (58) when a cutter-head (16) for corn is fitted on the combine harvester (10) and the detector (54) supplies a cutter-head signal to the engine controller (52).

3. A combine harvester (10) according to claim 1 or 2, **characterized in that** the engine controller (52) controls the internal combustion engine (50) in accordance with the second power curve (59) when a maize picker (80) is fitted on the combine harvester (10) and the detector (54) supplies a maize picker signal to the engine controller (52).

4. A combine harvester (10) according to any of claims 1 to 3, **characterized in that** the first power curve (58) corresponds to a higher output power than the second power curve (59).

5. A combine harvester (10) according to any of the preceding claims, **characterized in that** the first power curve (58) and/or the second power curve (59) comprises a family of power curves.

6. A combine harvester according to claim 5, **characterized in that** a power curve from the family of power curves is selected on the basis of a further operating parameter.

7. A combine harvester (10) according to any of the preceding claims, **characterized in that** the detector (54) for the crop gathering device supplies the current crop gathering device signal to the electronic engine controller (52) as a reaction to the fitting of a corresponding crop gathering device on the combine harvester (10).

8. A combine harvester (10) according to any of claims 1 to 6, **characterized in that** the detector (54) for the crop gathering device is actuated manually by an operator.

9. A method of controlling an internal combustion engine (50) of an agricultural combine harvester (10), which is equipped with an electronic engine controller (52) for controlling the internal combustion engine (50), with the following steps: storing a first power curve (58) in the electronic engine controller (52), storing a second power curve (59) in the electronic engine controller (52), **characterized in that** a crop gathering device signal dependent on the nature of a crop gathering device is fed to the electronic engine controller (52) from a detector (54) and **in that** the internal combustion engine (50) is controlled in accordance with the first or the second power curve in dependence on the crop gathering device signal.

10. A method according to claim 9, **characterized in that** the detector (54) detects the nature of the crop gathering device automatically.

## Revendications

1. Moissonneuse-batteuse (10), comprenant un dispositif de récolte pouvant être monté sur la moissonneuse-batteuse (10), un moteur à combustion interne (50) destiné à entraîner la moissonneuse-batteuse (10) ainsi qu'un système de pilotage électronique (52) du moteur, qui est relié au moteur à combustion interne (50) et commande la puissance maximale du moteur à combustion interne (50), une première courbe de puissance (58) et une seconde courbe de puissance (59) étant stockées dans une mémoire du système de pilotage électronique (52), **caractérisée en ce qu'**un détecteur (54) est prévu pour le dispositif de récolte, lequel détecteur met à disposition un signal de dispositif de récolte dépendant du type de dispositif de récolte et **en ce que** le système de pilotage électronique (52) du moteur commande le moteur à combustion interne (50) en fonction du signal de dispositif de récolte soit selon la première courbe de puissance (58), soit selon la seconde courbe de puissance (59).

2. Moissonneuse-batteuse (10) selon la revendication 1, **caractérisée en ce que** le système de pilotage (52) du moteur commande le moteur à combustion interne (50) selon la première courbe de puissance (58), lorsqu'une barre de coupe (16) pour les céréales est aménagée sur la moissonneuse-batteuse (10) et lorsque le détecteur (54) transmet un signal de barre de coupe au système de pilotage (52) du moteur.

3. Moissonneuse-batteuse (10) selon la revendication 1 ou 2, **caractérisée en ce que** le système de pilotage (52) du moteur commande le moteur à combustion interne (50) selon la seconde courbe de puissance (59), lorsqu'un cueilleur d'épi de maïs (80) est aménagé sur la moissonneuse-batteuse (10) et lorsque le détecteur (54) transmet un signal de cueilleur d'épi de maïs au système de pilotage (52) du moteur.

4. Moissonneuse-batteuse (10) selon l'une des revendications 1 à 3, **caractérisée en ce que** la première courbe de puissance (58) correspond à une puissance de sortie plus élevée que celle de la seconde courbe de puissance (59).

5. Moissonneuse-batteuse (10) selon l'une quelconque des revendications précédentes, **caractérisée en ce que** la première courbe de puissance (58) et/ou la seconde courbe de puissance (59) comprennent une famille de courbes de puissance.

6. Moissonneuse-batteuse selon la revendication 5, **caractérisée en ce qu'**une courbe de puissance est sélectionnée parmi la famille des courbes de puissance en s'appuyant sur un autre paramètre de fonctionnement.

7. Moissonneuse-batteuse (10) selon l'une quelconque des revendications précédentes, **caractérisée en ce que** le détecteur (54) pour le dispositif de récolte génère le signal de dispositif de récolte respectif du système de pilotage électronique (52) du moteur en réaction du fait qu'un dispositif de récolte correspondant est monté sur la moissonneuse-batteuse (10).

8. Moissonneuse-batteuse (10) selon l'une des revendications 1 à 6, **caractérisée en ce que** le détecteur (54) du dispositif de récolte est actionné manuellement par un opérateur.

9. Procédé de commande d'un moteur à combustion interne (50) d'une moissonneuse-batteuse (10) agricole, qui est équipée d'un système de pilotage électronique (52) de moteur destiné à commander le moteur à combustion interne (50), comprenant les étapes suivantes :
stockage d'une première courbe de puissance (58) dans le système de pilotage électronique (52) de moteur,
stockage d'une seconde courbe de puissance (59) dans le système de pilotage électronique (52) de moteur,
**caractérisé en ce qu'**un signal de dispositif de récolte dépendant du type du dispositif de récolte est amené au système de pilotage électronique (52) de moteur par un détecteur (54) et **en ce que** le moteur à combustion interne (50) est commandé en fonction du signal de dispositif de récolte selon la première ou la seconde courbe de puissance.

10. Procédé selon la revendication 9, **caractérisé en ce que** le détecteur (54) détecte automatiquement le type de dispositif de récolte.
